# EUROPÄISCHE PATENTSCHRIFT

(11) **EP 3 079 223 B1**
(45) Veröffentlichungstag und Bekanntmachung des Hinweises auf die Patenterteilung: **13.02.2019**
(21) Anmeldenummer: 16164172.5
(22) Anmeldetag: 07.04.2016
(51) Int. Cl.: H02J 7/34

(54) **BATTERIESYSTEM ZUR ELEKTRISCHEN VERBINDUNG MIT EINER KOMPONENTE**
BATTERY SYSTEM FOR ELECTRICAL CONNECTION TO A COMPONENT
SYSTÈME DE BATTERIE DESTINÉ AU RACCORDEMENT ÉLECTRIQUE D'UN COMPOSANT

(30) Priorität: 09.04.2015 DE 102015105428
(43) Veröffentlichungstag der Anmeldung: 12.10.2016
(73) Patentinhaber: HOPPECKE Advanced Battery Technology GmbH, 08056 Zwickau (DE)
(72) Erfinder: Fuchs, Andreas, 04229 Leipzig (DE); Winkler, Norman, 08056 Zwickau (DE)
(74) Vertreter: Bals, Rüdiger

(56) Entgegenhaltungen:
- DE-A1- 10 235 431
- DE-A1-102011 089 946
- DE-A1-102012 201 844
- DE-A1-102012 222 928

## Beschreibung

Die vorliegende Erfindung betrifft ein Batteriesystem zur elektrischen Verbindung mit einer Komponente. Ferner bezieht sich die Erfindung auf ein Verfahren zum Betreiben eines Batteriesystems sowie eine Ladevorrichtung für ein Batteriesystem.

Es ist aus dem Stand der Technik bekannt, dass Batteriesysteme, und insbesondere Lithiumbatterien, oft in einem Stromkreis mit (aktiven) Komponenten verbunden werden, welche z. B. ein Motorsteuergerät für Traktionsanwendungen oder Um- und/oder Wechselrichter aufweisen. Bspw. ist auch die Integration des Batteriesystems in ein Photovoltaiksystem denkbar, um eine Zwischenspeicherung und Netzeinspeisung von Solarstrom zu ermöglichen. Die Komponente bewirkt dabei z. B. eine Energieversorgung von Verbrauchern durch das Batteriesystem sowie ggf. eine Aufladung des Batteriesystems (z. B. durch Solarstrom). Die Komponenten besitzen dabei z. B. aufgrund ihrer aktiven Steuerung eine Eingangskapazität, welche beim Schließen des Stromkreises (z. B. durch einen Hauptschalter) hohe Einschaltströme verursacht. Die hohen Ströme werden lediglich durch den Innenwiderstand des Batteriesystems begrenzt und können zu Beschädigungen oder Zerstörung des Batteriesystems, von Verbrauchern und/oder der Komponente führen. Daher muss vor dem Schließen des Stromkreises zur Energieversorgung die Komponente z. B. durch eine Ladevorrichtung vorgeladen werden. Übliche Ladevorrichtungen weisen dabei z. B. einen Vorladewiderstand auf, welcher zu dem Hauptschalter parallel geschaltet ist. Durch Betätigung z. B. eines Vorladeschalters kann dabei vor dem Schließen des Hauptschalters eine Vorladung bewirkt werden.

Nachteilhaft bei den bekannten Lösungen ist, dass bekannte Ladevorrichtungen und Batteriesysteme mit Ladevorrichtungen eine hohe Verlustleistung und eine große Bauform aufweisen, wobei zur Ableitung der Wärme an die Umgebung eine aufwendige Kühlung notwendig ist. Auch können hohe Einschaltströme oft nicht zuverlässig begrenzt werden. So stellt sich z. B. beim Vorladen aufgrund des Vorladewiderstands ein Spannungsteiler zwischen dem Vorladewiderstand und der Komponente (bzw. dem Verbraucher) ein, wodurch beim Einschalten (d. h. Schließen des Stromkreises durch den Hauptschalter) weiterhin hohe Einschaltströme entstehen. Die Zuverlässigkeit bekannter Lösungen wird hierdurch beeinträchtigt.

Das Dokument DE 10 2012 201844 offenbart ein Batteriesystem gemäß dem Oberbegriff des Anspruchs 1.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine platzsparende, einfachere und/oder zuverlässigere Lösung für eine Ladevorrichtung bzw. ein Batteriesystem bereitzustellen.

Die voranstehende Aufgabe wird gelöst durch ein Batteriesystem mit den Merkmalen des Anspruchs 1, ein Verfahren mit den Merkmalen des Anspruchs 9 sowie durch eine Ladevorrichtung mit den Merkmalen des Anspruchs 12. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Batteriesystem beschrieben sind, selbstverständlich auch im Zusammenhang mit dem erfindungsgemäßen Verfahren sowie der erfindungsgemäßen Ladevorrichtung, und jeweils umgekehrt, so dass bezüglich der Offenbarung zu den einzelnen Erfindungsaspekten stets wechselseitig Bezug genommen wird bzw. werden kann.

Ebenfalls unter Schutz gestellt ist ferner ein Batteriemanagementsystem für ein erfindungsgemäßes Batteriesystem mit der erfindungsgemäßen Ladevorrichtung.

Die Aufgabe wird insbesondere gelöst durch ein Batteriesystem, insbesondere mit einem wiederaufladbaren elektrischen Energiespeicher, insbesondere einer Lithiumbatterie (insbesondere einem Lithium-Ionen-Akkumulator), zur elektrischen Verbindung mit einer Komponente, insbesondere einer aktiven Komponenten, vorzugsweise einem Um- und/oder Wechselrichter. Hierbei ist vorgesehen, dass das Batteriesystem eine aktive Ladevorrichtung, insbesondere eine aktive Vorladevorrichtung, zur Vorladung einer Eingangskapazität der Komponente durch einen elektrischen Vorladestrom umfasst, wobei die Ladevorrichtung derart ausgebildet und/oder in einem Stromkreis des Batteriesystems integriert ist, dass eine aktive Steuerung des Vorladestroms (durch die Ladevorrichtung) durchführbar ist. Die hat den Vorteil, dass der Vorladestrom aktiv gesteuert, d. h. bspw. erhöht und/oder begrenzt und/oder bestimmt werden kann, wobei hierdurch hohe Vorladeströme (d. h. eine hohe Stromstärke des Vorladestroms) erreicht werden können. Auf diese Weise werden z. B. Einschränkungen durch die Entstehung eines Spannungsteilers zwischen einem Vorladewiderstand und der Komponente bzw. einem Verbraucher vermieden. Somit kann aufgrund hoher Vorladeströme die Eingangskapazität zuverlässig aufgeladen und der Einschaltstrom begrenzt werden.

Die aktive Steuerung bezieht sich ggf. auch auf eine Reglung und umfasst insbesondere eine automatische, insbesondere elektronische Steuerung (d. h. insbesondere Regelung) des Vorladestroms (d. h. insbesondere der Stromstärke) durch die Ladevorrichtung. Diese Steuerung kann vorzugsweise ohne manuelle Einwirkung z. B. durch einen Benutzer erfolgen. Dabei wird durch die Steuerung bevorzugt eine vorbestimmte Stromstärke des Vorladestroms innerhalb eines vorgegebenen Toleranzbereiches beibehalten. Die maximale Schwankung der Stromstärke, d. h. der Toleranzbereich kann z. B. maximal 10 A und/oder maximal 1 A (Ampere) und/oder 1 mA und/oder 10 mA und/oder 100 mA betragen. Hierzu kann die Ladevorrichtung, welche z. B. als Treiberbaustein ausgebildet ist, den Vorladestrom stets und/oder intermittierend (ggf. mit einer bestimmten Abtastrate) erfassen (d. h. bspw. messen) und den Vorladestrom in Abhängigkeit von oberen und unteren Vorladestromgrenzwerten schalten. Die Überwachung des Vorladestroms erfasst dabei vorzugsweise die Stromstärke des Vorladestroms, welche für die Vorladestromgrenzwerte relevant sind. Die Stromstärke bzw. die Vorladestromgrenzwerte beziehen sich dabei insbesondere auf eine Stromstärke des Vorladestroms, mit welcher die Eingangskapazität während eines Vorladevorgangs vorgeladen wird. Der Vorladevorgang erfolgt bspw. nach dem Schließen des Vorladeschalters und/oder bei gleichzeitig offenen Hauptschalter, d. h. wenn der (Haupt-) Stromkreis des Batteriesystems bzw. Energiespeichers zur Energieversorgung der Komponente mit dem Batteriestrom noch nicht geschlossen ist, allerdings ein Vorladestromkreis bereits geschlossen wurde. Der Vorladestromkreis ist dabei insbesondere ein vom (Haupt-) Stromkreis (des Energiespeichers) separater Stromkreis des Energiespeichers und der Komponente. Im Gegensatz zum eigentlichen (Haupt-) Stromkreis (des Energiespeichers bzw. zum Betrieb der Komponente) fließt im Vorladestromkreis der Vorladestrom und/oder ist im Vorladestromkreis auch die Ladevorrichtung geschaltet. Der Hauptschalter schließt somit insbesondere den (Haupt-) Stromkreis des Batteriesystems bzw. des Energiespeichers und der Komponente derart, dass der Batteriestrom und/oder ein Lade- und/oder Entladestrom zur Komponente fließen kann. Der Vorladeschalter schließt insbesondere den Vorladestromkreis bei ansonsten offenem (Haupt-) Stromkreis derart, dass nur der Vorladestrom zur Komponente bzw. zur Eingangskapazität fließen kann. Zur Realisierung der aktiven Steuerung kommen vorzugsweise Elektronikkomponenten und/oder aktive elektrische Bauelemente zum Einsatz. Hierdurch wird der Vorteil erzielt, dass die Ladevorrichtung platzsparend und mit nur geringer Verlustleistung betrieben werden kann.

Unter einem elektrischen Energiespeicher wird insbesondere eine Batterie, d. h. vorzugsweise ein wiederaufladbarer insbesondere elektrochemischer Energiespeicher und/oder Sekundärbatterie verstanden. Der Energiespeicher kann somit mehrfach geladen und entladen werden, wobei bspw. die chemischen Reaktionen zur Energieerzeugung reversibel verlaufen. Dabei kann der Energiespeicher sowohl zur Speicherung von elektrischer Energie als auch als Energiequelle in einem (Haupt-) Stromkreis mit einer externen Komponente, wie einer Last und/oder einem Verbraucher und/oder einem Wechselrichter dienen. Über diesen (Haupt-) Stromkreis fließt dann der Lade- und/oder Entladestrom und/oder Batteriestrom (Verbraucherstrom) zum Betrieb der Komponente und/oder zum Aufladen des Energiespeichers. Die Komponente kann dabei bspw. eine aktive Komponente und/oder ein Wechselrichter z. B. eines Photovoltaiksystems sein. Weiter kann die Komponente z. B. einen Wechselrichter und/oder einen Umrichter und/oder ein Motorsteuergerät und/oder wenigstens einen (kapazitiven) Verbraucher und/oder weitere Geräte z. B. zur Aufladung des Energiespeichers und/oder Steuerung des Lade- und/oder Entladestroms und/oder zur Netzeinspeisung aufweisen. Dabei kann z. B. durch und/oder über die Komponente Energie, insbesondere der Ladestrom, zum Batteriesystem zur Aufladung des Energiespeichers fließen. Hierdurch ist es möglich, dass der Energiespeicher z. B. Solarstrom zwischenspeichert. Weiter ist es denkbar, dass der Energiespeicher an und/oder über die Komponente Energie, d. h. insbesondere der Entladestrom, zum Betrieb der Komponente oder weiterer Verbraucher oder zur Einspeisung in das Netz ausgibt. Der Lade- und/oder Entladestrom, d. h. insbesondere der Batteriestrom, fließt dabei durch die Leitungen des (Haupt-) Stromkreises des Energiespeichers.

Der (Haupt-) Stromkreis, d. h. die elektrische Verbindung zwischen dem Energiespeicher und der Komponente, kann beispielsweise über Verbindungskontakte hergestellt werden, welche insbesondere als Endableitung ausgebildet oder mit solchen verbunden sind. Die Verbindungskontakte sind beispielsweise Metallkontakte, welche eine Beschichtung (z. B. mit Zinn und/oder Gold und/oder Nickel) zur Verbesserung der Leitfähigkeit aufweisen.

Weiter ist es auch denkbar, dass der Energiespeicher für den Betrieb von Fahrzeugen und/oder Flurförderfahrzeugen und/oder Elektrofahrzeugen und/oder Elektromotoren, insbesondere als Traktionsbatterie ausgebildet ist. Auch der Betrieb des Energiespeichers an einem Wechselrichter, insbesondere Solarwechselrichter, beispielsweise in einem Photovoltaiksystem kann vorgesehen sein. Hier sind insbesondere Lithiumbatterien aufgrund ihrer hohen Leistungsdichte besonders geeignet. Eine weitere mögliche Anwendung des Energiespeichers ist z. B. der Einsatz als unterbrechungsfreie Stromversorgung.

Der Energiespeicher ist und/oder umfasst bevorzugt wenigstens eine Batterie, wobei unter Batterie im Rahmen der Erfindung insbesondere eine Sekundärbatterie bzw. ein Akkumulator verstanden wird. Der Energiespeicher kann dabei auch eine Zusammenschaltung mehrerer Batterien aufweisen. Unter Batterie wird dabei insbesondere eine Zusammenschaltung mehrerer galvanische Zellen (insbesondere Batteriezellen) verstanden, wobei die Zellen den Batteriestrom durch eine chemische Reaktion erzeugen.

Die einzelnen Zellen werden bevorzugt zusammengefasst, beispielsweise in einer Parallelschaltung und/oder in einer seriellen Schaltung elektrisch miteinander verbunden, sodass auf diese Weise ein Zellpaket entsteht. Weiter weist der Energiespeicher ggf. ein Elektrolyt auf, welches z. B. auf Polymerbasis vorliegt. Der Energiespeicher ist insbesondere eine Lithiumbatterie, vorzugsweise Lithium-Ionen-Batterie (Lithium-Ionen-Akkumulator) und/oder eine Lithium-Polymer-Batterie und/oder eine Lithium-Cobaltdioxid-Batterie und/oder eine Lithium-Titanat-Batterie und/oder eine Lithium-Luft-Batterie und/oder eine Lithium-Mangandioxid-Batterie und/oder eine Lithium-Eisenphosphat-Batterie und/oder eine Zinn-Schwefel-Lithium-Ionen-Batterie und/oder dergleichen. Die Lithiumbatterie zeichnet sich durch einen sehr geringen Innenwiderstand und durch hohe Leistungsfähigkeit auch bei geringeren Kapazitäten aus. Sie lässt dabei eine nahezu vollständige Entladung zu und weist eine hohe Energie- und Leistungsdichte auf.

Ein Batteriesystem umfasst zumindest eine oder mehrere Zellen und/oder ein oder mehrere Zellpakete. Bevorzugt weist das Batteriesystem zumindest ein Zellpaket mit mindestens 8 Zellen und/oder maximal 16 Zellen und/oder maximal 24 Zellen auf. Durch eine Zusammenschaltung der Zellen ist eine besonders einfache und kostengünstige Skalierung des Batteriesystems möglich. Das Batteriesystem, insbesondere als wiederaufladbares Batteriesystem, weist vorzugsweise zumindest einen wiederaufladbaren Energiespeicher auf. Bei einem Lithium-Ionen-Batteriesystem ist dabei zumindest eine wiederaufladbare Lithiumbatterie als Energiespeicher vorgesehen. Das Batteriesystem umfasst ferner Kontakte zur Verbindung mit der externen Komponente, z. B. einen ersten Verbindungskontakt am Minuszweig und einen zweiten Verbindungskontakt am Pluszweig des Energiespeichers. Die Verbindungskontakte bilden somit vorzugsweise die Klemmen des als Energiequelle eingesetzten Energiespeichers, wobei im nicht angeschlossenen Zustand (offener Stromkreis) an den Verbindungskontakten die Leerlaufspannung anliegt. Auch ist beispielsweise ein Hauptschalter zum manuellen Schließen und/oder Unterbrechen des Stromkreises vorgesehen, um die elektrische Energieversorgung bzw. den elektrischen Energieaustausch mit der Komponente herzustellen oder zu unterbrechen. Der Hauptschalter dient also vorzugsweise dazu, den Batteriestrom vollständig zu unterbinden. Die maximale Ausgangsspannung und/oder Leerlaufspannung und/oder Nennspannung des Batteriesystems beträgt z. B. maximal 12 V und/oder 26 V und/oder 50 V. Weiter liegt die Nennspannung der einzelnen Zellen im Bereich von 2 bis 5 V, insbesondere 2,9 bis 3,7 V.

Das Batteriesystem, insbesondere Lithium-Batterie-System, wird vorzugsweise mit aktiven Komponenten verwendet. Als Komponenten werden beispielsweise Motorsteuergeräte für Traktionsanwendungen (d. h. Industrieanwendungen, Kleintraktion und Flurförderfahrzeuge und dergleichen), Um- und/oder Wechselrichter zusammen mit dem Batteriesystem genutzt. Die Komponente ist dabei wiederum typischerweise mit weiteren Verbrauchern verbunden, wie mit einem Solarpanel, einem Motor oder einem Anschlussnetz. Das Batteriesystem ermöglicht dabei beispielsweise die Zwischenspeicherung des Solarstroms und somit einen besonders energieeffizienten Betrieb einer Photovoltaikanlage.

Die Stromversorgung der Komponente und/oder der elektrische Energieaustausch zwischen der Komponente und dem Batteriesystem (d. h. insbesondere mit den einzelnen Batterien und/oder Zellen und/oder Energiespeichern des Batteriesystems) erfolgt vorzugsweise durch eine Zusammenschaltung der Komponente mit dem Batteriesystem in dem (Haupt-) Stromkreis des Energiespeichers. Die Komponente wird hierzu z. B. an den Verbindungskontakten elektrisch mit dem Batteriesystem verbunden und ggf. zumindest ein Schalter wie ein Hauptschalter des Batteriesystems geschlossen, derart, dass der (Haupt-) Stromkreis ebenfalls geschlossen wird, und ein Stromfluss (des Batteriestroms, d. h. beispielsweise des Lade- und/oder Entladestroms) möglich ist. Hierdurch wird ein sicherer Betrieb gewährleistet.

Als Komponente können z. B. Stromrichter, wie ein Gleichspannungswandler, ein Wechselrichter und insbesondere ein Solarwechselrichter eingesetzt werden. Unter Wechselrichter wird insbesondere ein elektrisches Gerät verstanden, welches Gleichspannung in Wechselspannung umrichtet. Zur Steigerung des Wirkungsgrades wird hier bevorzugt ein Wechselrichter mit Halbleitern, insbesondere aus Siliziumkarbid genutzt, besonders bevorzugt getaktet, um einen zuverlässigen Betrieb mit geringen Verschleiß zu ermöglichen. Der Wechselrichter kann als ein elektrisches Gerät mit Transformatoren zur galvanischen Trennung oder transformatorlos und daher mit hohem Wirkungsgrad ausgestaltet sein. Der Transformator ermöglicht dabei eine galvanische Trennung zwischen dem Gleichstromsystem (dem Batteriesystem) und dem Wechselstromsystem. Vorzugsweise wird ferner ein selbstgeführter Wechselrichter eingesetzt, um durch eine eigene Taktquelle unabhängig vom Netz betrieben zu werden, wobei ggf. am Wechselrichter zumindest ein Wechselstromverbraucher betrieben wird. Insbesondere erfolgt durch den Wechselrichter eine Anpassung des Batteriestroms (des Batteriesystems) an Netzbedingungen, d. h. an z. B. 230 V Wechselspannung und an eine Frequenz von z. B. 50 Hz. Optional kann der Wechselrichter auch einen MPP-Regler (Maximum Power Point Tracking) für die Anpassung des Wechselrichters an den Punkt der maximalen Leistung aufweisen, vorzugsweise zum Betrieb mit einer Photovoltaik-Anlage eines Photovoltaiksystems zum Betreiben der Solarzellen im Leistungsmaximum. Hierzu weist der Wechselrichter vorzugsweise aktive und/oder integrierte Bauelemente, wie z. B. Mikroprozessoren auf. Das Batteriesystem ist hierbei vorzugsweise dazu geeignet und ausgelegt, Solarstrom des Photovoltaiksystems (d. h. der Solarzellen) zwischenzuspeichern. Das Batteriesystem kann beispielsweise bis zu 2,5 kWh, 5 kWh und/oder bis zu 10 kWh und/oder bis zu 20 kWh und/oder bis zu 100 kWh speichern. Somit ist ein besonders effizienter Betrieb der Photovoltaikanlage möglich.

Die Komponente kann ferner auch ein Kommunikationssystem aufweisen, z. B. ein Bussystem (wie einen CAN- und/oder SPI-Bus), welches zur Datenkommunikation mit externen Geräten und/oder einem Batteriemanagementsystem des Batteriesystems genutzt wird. CAN steht hierbei für "Controller area network" und SPI für "Serial Peripheral Interface"-Bus. Dies ermöglicht eine einfache Überwachung und Steuerung der Komponente.

Aufgrund ihres Aufbaus und der aktiven Steuerung weisen solche Komponenten eine Eingangskapazität auf. Bei einem Anschluss des Batteriesystems mit der Komponente muss die Eingangskapazität vorgeladen werden, um die Einschaltströme zu begrenzen und einen sichereren Betrieb zu gewährleisten. Bevorzugt kommt hierzu eine Ladevorrichtung des Batteriesystems zum Einsatz. Die Vorladung durch die Ladevorrichtung erfolgt dabei vorteilhafterweise bereits bevor die vollständige Energieversorgung durch das Batteriesystem hergestellt wird (z. B. durch Betätigung eines Hauptschalters des Batteriesystems) durch einen möglichst konstanten und hohen Vorladestrom. Zur Vorladung wird beispielsweise durch einen Benutzer zunächst ein Vorladeschalter (Precharge-Schalter) zum Schließen eines Vorladestromkreises aktiviert, bevor der Hauptschalter aktiviert wird. Dabei wird der Vorladestrom insbesondere wie der eigentliche Batteriestrom dem zumindest einen Energiespeicher des Batteriesystems entnommen. Hier kann auch eine Kontrolleinheit vorgesehen sein, welche z. B. erst nach durchgeführter Vorladung eine Betätigung des Hauptschalters und/oder ein Schließen des (Haupt-) Stromkreises (zum Betrieb der Komponente mit der Batterie) erlaubt, um so die Sicherheit noch weiter zu erhöhen. Hierbei unterscheiden sich somit der Vorladestromkreis zur Vorladung von dem Stromkreis des Energiespeichers zum eigentlichen Betrieb der Komponente an dem Energiespeicher mit dem Batteriestrom (d. h. insbesondere der Lade- und/oder Entladestrom) dadurch, dass im Vorladestromkreis ausschließlich der (begrenzte) Vorladestrom fließt. Auch ist es denkbar, dass bei dem Stromkreis (d. h. dem Hauptstromkreis) immer ein nur durch den Energiespeicher selbst begrenzter Batteriestrom fließen kann, wobei der Vorladestrom des Vorladestromkreises zusätzlich begrenzt wird.

Überspannung, Überstrom, Kurzschlüsse, Überladen, Hitze und/oder mechanische Einwirkungen können kritische Zustände hervorrufen, welche zu einer Zerstörung des Energiespeichers führen. Bevorzugt ist daher das Batteriesystem aus Sicherheitsgründen mit einem Batteriemanagementsystem ausgestattet. Das Batteriemanagementsystem weist insbesondere eine Überwachungs-, Steuerungs-, und/oder Kommunikationsfunktionalität auf. Es ermöglicht so beispielsweise eine Überwachung von Parametern des Energiespeichers (d. h. auch des Batteriesystems und/oder der Umgebung des Batteriesystems), insbesondere eine Messwerterfassung am Batteriesystem bzw. an dem (Haupt-) Stromkreis des Energiespeichers. Somit können Messgrößen wie (Batterie-und/oder Zell-) Strom, (Batterie- und/oder Zell-) Spannung, (Batterie- und/oder Zell-) Impedanz, Temperatur (z. B. der Zellen und/oder der Umgebung), Kapazität der Energiespeicherzellen und/oder des Energiespeichers und/oder Beschleunigungen erfasst und überwacht werden. Auch können der Ladezustand, Überladung, Überentladung und die Funktionsfähigkeit, z. B. durch Auswertung der erfassten Messgrößen (d. h der erfassten Messwerte) als Parameter ermittelt werden. Hierzu kommt beispielsweise zumindest eine Überwachungsvorrichtung zum Einsatz, welche die Messwerterfassung durchführt und ggf. auch auswertet. Die Überwachungsvorrichtung kann dabei insbesondere ein Überwachungssystem sein, welches z. B. wenigstens zwei (ggf. autonome und/oder separat ausgebildete) Überwachungseinheiten, jeweils ggf. mit weiteren Sensoren umfasst. Die Überwachungseinheiten müssen dabei nicht zwangsläufig identisch oder ähnlich ausgebildet sein, wobei eine erste Überwachungseinheit z. B. unterschiedlich zu einer zweiten Überwachungseinheit konstruiert ist. Somit können die Überwachungseinheiten einen unterschiedlichen spezialisierten Funktionsumfang aufweisen, welcher dem jeweiligen Anwendungszweck angepasst ist.

Bevorzugt kann die Auswertung der durch die Überwachungsvorrichtung (d. h. auch ggf. durch die Überwachungseinheiten) überwachten Parameter bzw. erfassten Messgrößen auch durch eine Ansteuerungseinheit und/oder durch eine Auswerte-Steuerungseinheit erfolgen. Besonders bevorzugt können durch die Messwerterfassung anhand der Auswertung der Parameter kritische Zustände des Batteriesystems und/oder der einzelnen Zellen (d. h. die Energiespeicherzellen z. B. von jedem Zellpaket des Batteriesystems bzw. Energiespeichers), wie ein Überstrom, Überspannung, eine kritische Temperatur oder eine drohende Tiefenentladung erkannt und/oder Gegenmaßnahmen eingeleitet werden. Auf Grundlage der Messwerterfassung wird beispielsweise der (Haupt-) Stromkreis ganz oder teilweise (z. B. auch nur der Verbraucherstrom oder die Energieversorgung des Batteriemanagementsystems) unterbrochen. Somit kann die Sicherheit bei einem Betrieb des Batteriesystems deutlich gesteigert werden.

Vorzugsweise kann bei einem Eintreten und/oder Vorliegen eines kritischen Zustands, d. h. beispielsweise dem Überschreiten und/oder Unterschreiten eines kritischen Temperaturschwellenwerts und/oder bei einem Überschreiten und/oder Unterschreiten eines kritischen Spannungs- und/oder Stromschwellenwertes (d. h. einer Grenzwertverletzung), der (Haupt-) Stromkreis von dem Batteriesystem zum Verbraucher vollständig durch das Batteriemanagementsystem z. B. mittels zumindest einer Halbleiterschalteinheit und/oder einer Sicherheitsschalteinheit und/oder einer Überstromschutzeinrichtung unterbrochen werden. Die Schwellenwerte können somit einen oberen und einen unteren Schwellenwert aufweisen, wobei die Unterschreitung des unteren Schwellenwertes und die Überschreitung des oberen Schwellenwertes beide einen kritischen Zustand darstellen. Typischerweise kann der Schwellenwert für die Temperatur z. B. maximal -10 °C (Grad Celsius) oder 0 °C und der obere Schwellenwert z. B. mindestens 40 °C betragen. Somit können kritische Zustände effektiv erfasst und Schäden verhindert werden. Allerdings muss auch die Energieversorgung zum Batteriemanagementsystem stets gewährleistet sein, um die Messwerterfassung, Verarbeitung und Kommunikation stets zu ermöglichen. Daher erfolgt die Energieversorgung vorteilhafterweise durch den Energiespeicher.

Auch ist es denkbar, dass durch das Batteriemanagementsystem, insbesondere durch die Auswerte-Steuerungseinheit, der Zustand des Batteriesystems und/oder Energiespeichers ermittelt wird. Der Zustand ermöglicht es dabei beispielsweise, die Leistungsfähigkeit des Batteriesystems zu bestimmen Dabei können Parameter, insbesondere Messgrößen wie Temperatur und/oder Spannung und/oder Ladezustand und/oder weitere Parameter wie Alter des Energiespeichers, Zyklenzahl (Lade-Entlade-Zyklen), Spannungscharakteristik und Innenwiderstand herangezogen werden. Zur Auswertung und Speicherung dieser Daten weist das Batteriemanagementsystem beispielsweise einen mit der Auswerte-Steuerungseinheit verbundenen Datenspeicher auf. Dabei kann die Auswerte-Steuerungseinheit z. B. Algorithmen oder Auswerteverfahren nutzen und insbesondere elektronisch ausführen, um die Parameter zueinander in Beziehung zu setzen und den Zustand zu ermitteln.

Das Batteriemanagementsystem weist vorzugsweise auch ein Kommunikationssystem auf, z. B. ein Bussystem, welches zur (Daten-)kommunikation mit externen Geräten und/oder einer am Batteriesystem angeschlossenen Komponente genutzt wird. Das Bussystem weist insbesondere einen CAN-Bus und/oder SPI-Bus auf. Weiter kann das Batteriemanagementsystem eine Elektronik aufweisen, insbesondere die Auswerte-Steuerungseinheit, zumindest einen nicht-flüchtigen Datenspeicher und/oder Schnittstelleneinheiten (wie Datenschnittstellen), wobei die Auswerte-Steuerungseinheit und/oder die Schnittstelleneinheit z. B. als Mikrocontroller und/oder Mikroprozessor und/oder digitaler Signalprozessor und/oder integrierter Schaltkreis ausgebildet sind. Die Elektronik kann bevorzugt auf einer Platine des Batteriemanagementsystems angeordnet und/oder elektrisch miteinander verbunden sein. Auch kann vorgesehen sein, dass das Batteriemanagementsystem programmierbar ausgestaltet ist, und somit die Funktionalität variabel ergänzt und/oder modifiziert werden kann. Weiter ist auch die Kommunikation zu einer Displayeinheit denkbar, um z. B. Parameter und/oder den Zustand für einen Benutzer anzuzeigen. Zur Kommunikation, zum Auslesen des Datenspeichers und/oder zur Programmierung kann das Batteriemanagementsystem ferner Schnittstellen und/oder Verbindungen, insbesondere elektrisch leitende Steckverbindungen aufweisen. Der zumindest eine Datenspeicher kann dabei extern von der Auswerte-Steuerungseinheit angeordnet und/oder in der Auswerte-Steuerungseinheit integriert sein, und dabei z. B. als Flash-Speicher und/oder RAM (Random-Access Memory) und/oder SD-Speicher (Secure Digital Memory Card) oder dergleichen ausgebildet sein. Im Datenspeicher werden insbesondere die erfassten Parameter (ggf. als Protokoll und/oder mit Zeitstempeln) und/oder relevante Daten des Batteriesystems (auch Kenndaten und/oder Authentifizierungsinformationen) gespeichert. Die Kenndaten des Energiespeichers sind beispielsweise Zellenspannung, Temperaturempflindlichkeit, Zyklenlebensdauer, maximal erlaubter Lade- oder Entladestrom, welcher zur Überwachung und/oder Steuerung herangezogen und mit den Parametern bzw. erfassten Messwerten verglichen werden können (z. B. durch eine Auslesung des Datenspeichers durch die Auswerte-Steuerungseinheit). Auch ist es denkbar, dass das Batteriemanagementsystem eine Authentifizierungsfunktion z. B. zur Authentifizierung eines Benutzers aufweist, so dass die Nutzung des Batteriesystems nur bei erfolgreicher Authentifizierung gestattet wird. Auch kann das Batteriemanagementsystem zumindest eine Sicherheitseinheit aufweisen, welche den Betrieb des Batteriemanagementsystems überwacht und damit die Sicherheit weiter erhöht. Die Sicherheitseinheit und/oder das Batteriemanagementsystem können ferner unter Berücksichtigung eines Sicherheits-Integritätslevels (z. B. gemäß IEC 61508/IEC61511) konstruiert sein und/oder betrieben werden und entsprechende Anforderungsstufen erfüllen. Die Anforderungsstufen werden dabei auch nach SIL (Safety Integrity Level) Sicherheitsintegritätslevel klassifiziert. So weisen sicherheitskritische Komponenten des Batteriemanagementsystems, z. B. die Auswerte-Steuerungseinheit und/oder die Schalteinheiten und/oder die Überwachungsvorrichtung beispielsweise redundant ausgeführte Signalleitungen auf, um so die Sicherheitsanforderungen zu erfüllen.

Es kann vorgesehen sein, dass das Batteriemanagementsystem zur Steuerung des Batteriesystems eingesetzt wird. Unter Steuerung wird im Rahmen der Erfindung auch eine Regelung (mit einer Rückkopplung bzw. Rückführung in einer Regelstrecke) verstanden. Hierzu kann die Auswerte-Steuerungseinheit z. B. wenigstens einen Regler und/oder einen Laderegler (insbesondere ein Mikrocontroller mit Verbindung zur Überwachungsvorrichtung) zur Regelung (Steuerung) des Ladevorgangs aufweisen. So ist z. B. eine Limitierung und Steuerung von Lade- und Entladeströmen im (Haupt-) Stromkreis des Energiespeichers möglich. Insbesondere weist das Batteriemanagementsystem zumindest ein Schalterelement, insbesondere Halbleiterschalter auf, um den (Haupt-) Stromkreis zu schalten und/oder den Batteriestrom (insbesondere zu einer Komponente) zumindest in eine Richtung zu unterbinden. Durch die Ansteuerung des zumindest einen Schaltelementes kann beispielsweise auch die Einhaltung einer oberen und/oder unteren Spannungsgrenze und/oder einer oberen und/oder unteren Ladungsgrenze bewirkt werden, wobei hierzu bevorzugt die Zellspannungen durch die Überwachungsvorrichtung des Batteriemanagementsystems überwacht werden. Hierdurch entsteht insbesondere bei Lithium-Batterien ein deutlicher Vorteil, da diese nur in geringen Spannungsbereichen sicher betrieben werden können. Auch können ferner die ermittelten (d. h. gemessenen bzw. erfassten) Parameter ausgewertet und in Abhängigkeit von dieser Auswertung das zumindest eine Schaltelement angesteuert werden. Weiter ist es denkbar, dass in Abhängigkeit von den überwachten Parametern ein Kühlsystem des Batteriesystems durch das Batteriemanagementsystem angesteuert wird, insbesondere in Abhängigkeit von der Temperaturüberwachung. Weiter wird ggf. eine Steuerung des Lade- und Entladeprozesses, insbesondere auch für jede einzelne Zelle und/oder für das gesamte Batteriesystems bzw. den gesamten Energiespeicher, im Rahmen eines "Balancing" durch das Batteriemanagementsystem durchgeführt. Das Balancing ermöglicht beispielsweise eine Angleichung von ungleichen Ladungszuständen der einzelnen Zellen des Energiespeichers bzw. Batteriesystems. Hierzu erfolgt eine Auswertung der Überwachungsvorrichtung und/oder Steuerung der Schalteinheiten durch die Auswerte-Steuerungseinheit derart, dass eine Angleichung bewirkt wird. Die Überwachungsvorrichtung kann hierfür die Parameter für den Energiespeicher und/oder für die einzelnen Zellen des Energiespeichers erfassen. So können auch Parameter, wie die Kapazität des Energiespeichers und/oder der einzelnen Zellen, Betriebsdaten, Leckströme, die Ladungszustände (State of Charge, SOC) des Energiespeichers und/oder der einzelnen Zellen und/oder die Ruhespannung (Open Circuit Voltage, OCV) des Energiespeichers und/oder der einzelnen Zellen als Parameter erfasst werden. Somit kann die Lebensdauer und Leistung des Batteriesystems deutlich erhöht werden.

Die Schalteinheiten können beispielsweise als mechanische Schalter und/oder Taster und/oder Relais und/oder elektronische Schalter und/oder Halbleiterschalter und/oder dergleichen ausgebildet sein. Relais und/oder mechanische Schalter besitzen dabei den Vorteil, dass eine vollständige galvanische Trennung des (Haupt-) Stromkreises erfolgen kann. Unter einer Halbleiterschalteinheit werden beispielsweise auch ein Halbleiterschalter, d. h. ein elektrisches Halbleiter-Bauelement, insbesondere ein Leistungshalbleiter und/oder ein Transistor und/oder ein Feldeffekttransistor und/oder ein MOSFET (metal oxide semiconductor field-effect transistor) und/oder Leistungs-MOSFET verstanden. Solche Halbleiterschalter zeichnen sich vorzugsweise dadurch aus, dass eine Unterbindung des Stromflusses nur für eine bestimmte Stromrichtung erfolgen kann. Dies ist besonders vorteilhaft für Anwendungen wie dem "Balancing", wobei ggf. ein erster Halbleiterschalter im positiven Strompfad (Pluszweig) und ein zweiter Halbleiterschalter im negativen Strompfad (Minuszweig) des (Haupt-) Stromkreises integriert sind. Hierdurch kann beispielsweise der Lade- und/oder Entladestrom gesteuert werden, wobei z. B. entweder nur der Lade- oder nur der Entladestrom zugelassen wird. Die Steuerung erfolgt bevorzugt in Abhängigkeit von der Parameter-Überwachung (z. B. einer Überwachung der Kapazität durch die Überwachungsvorrichtung). Der Leistungshalbleiter und/oder Leistungs-MOSFET ist dabei bevorzugt für das Schalten und Unterbinden (d. h. Sperren) großer Ströme und Spannung geeignet, insbesondere Stromstärken bis maximal 50 A (Ampere) und/oder 100 A und/oder 200 A und/oder 500 A und/oder 800 A und/oder Spannungen bis maximal 1000 V (Volt).

Ein weiterer Vorteil kann im Rahmen der Erfindung erzielt werden, wenn die Ladevorrichtung eine Messvorrichtung zur Überwachung, insbesondere Messung und/oder Reglung des Vorladestroms aufweist. Die Messvorrichtung weist dabei bspw. zumindest eine Messeinheit, insbesondere einen Sensor auf, welcher eine Erfassung der Stromstärke des Vorladestroms ermöglicht. Optional umfasst die Messvorrichtung einen Shuntwiderstand (Strommesswiderstand). Zusätzlich oder alternativ kann die Messvorrichtung auch als elektronische und/oder integrierte und/oder elektrische Schaltung ausgebildet sein, welche insbesondere mittels einer Rückkopplung und/oder Gegenkopplung eine Überwachung des Vorladestroms und insbesondere die aktive Steuerung bewirkt. Hierdurch wird der Vorteil erzielt, dass der Vorladestrom zuverlässig aktiv gesteuert und konstant gehalten werden kann. Die Überwachung ermöglicht somit ein Begrenzen des Vorladestroms (d. h. der Stromstärke) beim Erreichen eines oberen (maximalen) Vorladestromgrenzwerts und Erhöhung des Vorladestroms beim Erreichen eines unteren (minimalen) Vorladestromgrenzwerts. Hierzu kann es weiter vorgesehen sein, dass die Messvorrichtung zumindest eine elektronische, insbesondere aktive und/oder integrierte Komponente, wie einen Halbleiterschalter, d. h. insbesondere einen Transistor und/oder einen Feldeffekttransistor und/oder einen MOSFET und/oder einen Operationsverstärker umfasst. Dabei sind die elektronischen Komponenten vorzugsweise derart insbesondere als integrierte Schaltung miteinander verschaltet, dass eine Stromregelung möglich ist. Auch ist es denkbar, dass die Messvorrichtung zumindest einen Regler, insbesondere Schaltregler aufweist und/oder als Regler ausgebildet ist.

Ein weiterer Vorteil kann im Rahmen der Erfindung erzielt werden, wenn die Ladevorrichtung eine Steuerungseinheit aufweist, um in Abhängigkeit von der Überwachung der Messvorrichtung den Vorladestrom aktiv zu steuern und insbesondere zu schalten. Die Steuerungseinheit kann vorzugsweise baulich separat und/oder unabhängig von der Messvorrichtung ausgebildet sein oder alternativ mit der Messvorrichtung ein gemeinsames Bauteil bilden. Die Messvorrichtung und die Steuerungseinheit können somit auch eine gemeinsame z. B. integrierte Schaltung bilden. Die Steuerungseinheit weist z. B. eine elektronische Schalteinheit, insbesondere einen Halbleiterschalter auf. Es ist denkbar, dass die Steuerungseinheit derart elektronisch mit der Messvorrichtung verbunden ist, dass in Abhängigkeit von der Überwachung der Schalter angesteuert wird. Die Überwachung kann hierbei z. B. ermitteln, wenn die Stromstärke des Vorladestroms einen oberen Vorladestromgrenzwert überschreitet und/oder einen unteren Vorladestromgrenzwert unterschreitet. Die Steuerungseinheit wird dann vorzugsweise bei dem Erreichen bzw. Überschreiten des oberen Vorladestromgrenzwerts die Schalteinheit schalten (z. B. öffnen). Durch das Schalten (Öffnen) der Schalteinheit sinkt daraufhin der Vorladestrom. Erreicht und/oder unterschreitet der Vorladestrom dann den unteren Vorladestromgrenzwert, so schaltet (z. B. schließt) die Steuerungseinheit die Schalteinheit erneut. Hierdurch steigt der Vorladestrom wieder an. Somit kann der Vorladestrom zuverlässig innerhalb eines bestimmten Stromstärkenbereichs geregelt werden.

Weiter ist im Rahmen der Erfindung denkbar, dass die Ladevorrichtung im negativen Strompfad und/oder im positiven Strompfad des Energiespeichers und/oder des Batteriesystems angeordnet ist. Dabei kann die Ladevorrichtung im entsprechenden Strompfad und/oder im Vorladestromkreis derart angeordnet sein und/oder integriert sein, dass eine aktive Steuerung des Vorladestroms durchführbar ist. Die Ladevorrichtung kann insbesondere derart im Vorladestromkreis integriert sein, dass zumindest eine Leitung des Vorladestromkreises unterbrochen und/oder der Stromfluss in der Leitung zumindest in eine Richtung unterbunden werden kann. Die Steuerung des Vorladestroms durch die Ladevorrichtung bewirkt dabei insbesondere ein Zunehmen und/oder ein Abnehmen der Stromstärke des Vorladestroms an der Eingangskapazität der Komponente bzw. des Verbrauchers. Dies hat den Vorteil, dass die Ladevorrichtung leicht und flexibel in das Batteriesystem integrierbar ist und eine zuverlässige Steuerung des Vorladestroms ermöglicht. Durch die Anordnung sowohl im positiven als auch im negativen Strompfad kann ferner bei der Nutzung von Halbleiterschaltern, welche den Stromfluss lediglich in eine Richtung sperren, die zuverlässige Unterbrechung des Stromflusses in beide Richtungen gewährleistet werden.

Vorteilhafterweise kann bei der Erfindung vorgesehen sein, dass die Ladevorrichtung derart ausgebildet ist, dass ein Vorladestrom mit einer Stromstärke von mindestens 0,1 Ampere und/oder 0,5 Ampere und/oder 1 Ampere und/oder 2 Ampere und/oder 5 Ampere und/oder 10 Ampere lieferbar ist. Der Vorladestrom kann weiter bspw. eine Stromstärke von 0,5 A bis 15 A, insbesondere 1 A bis 10 A aufweisen. Durch die Gewährleistung hoher Stromstärken kann eine zuverlässige Aufladung der Eingangskapazität und damit die Verringerung der Einschaltströme gewährleistet werden.

Vorteilhafterweise kann bei der Erfindung vorgesehen sein, dass die Ladevorrichtung als Konstantstromquelle und/oder Stromlimitierungsvorrichtung ausgebildet ist und/oder einen im Wesentlichen konstanten Vorladestrom liefert und/oder den Vorladestrom derart regelt, dass der Vorladestrom im Wesentlichen konstant gehalten wird. Weiter ist es denkbar, dass die Ladevorrichtung und insbesondere die Stromlimitierungsvorrichtung den Vorladestrom derart regelt, dass die Stromstärke des Vorladestroms auf einen bestimmten (maximalen) Wert begrenzt wird, insbesondere auf maximal 0,5 A und/oder maximal 1 A und/oder maximal 10 A und/oder maximal 15 A. Alternativ oder zusätzlich kann es möglich sein, dass die Ladevorrichtung zumindest eine Konstantstromquelle und/oder Stromlimitierungsvorrichtung aufweist. Die Ladevorrichtung kann den Batteriestrom bspw. derart regeln, dass ein im Wesentlichen konstanter Vorladestrom (innerhalb bestimmter Grenzen) ausgegeben wird. Weiter kann die Ladevorrichtung bspw. zumindest eine getaktete Konstantstromquelle und/oder zumindest eine getaktete Stromlimitierungsvorrichtung aufweisen. Die Konstantstromquelle eignet sich dabei dazu, einen möglichst konstanten Vorladestrom zur Aufladung der Eingangskapazität auszugeben. Dabei ist die Konstantstromquelle insbesondere als Gleichstromquelle ausgebildet. Weiter kann die Konstantstromquelle im positiven und/oder im negativen Strompfad integriert und/oder im Vorladestromkreis integriert sein, sodass bei geschlossenem Vorladestromkreis eine elektrische Verbindung zu der Komponente und zur Eingangskapazität besteht. Die Konstantstromquelle weist vorzugsweise zumindest eine Elektronikkomponente auf, insbesondere zumindest einen Halbleiterschalter. Die elektrischen und oder elektronischen Komponenten können dabei vorzugsweise als integrierte Schaltung ausgebildet sein. Dabei weist die Konstantstromquelle zumindest einen Regler auf und/oder integriert die Messvorrichtung, um in Abhängigkeit von der Überwachung des Vorladestroms die Stromstärke zu regulieren. Weiter kann die Ladevorrichtung bspw. als getaktete Ladevorrichtung, d. h. insbesondere mit einer getakteten Konstantstromquelle ausgebildet sein. Dies hat den Vorteil, dass insbesondere unabhängig vom Verbraucherwiderstand ein konstanter Vorladestrom erzeugt werden kann.

Vorteilhafterweise kann bei der Erfindung vorgesehen sein, dass die Ladevorrichtung zumindest ein aktives und/oder integriertes elektrisches Bauelement und/oder eine Elektronikkomponente aufweist, insbesondere eine Halbleiterschalteinheit (d. h. einen Halbleiterschalter), insbesondere einen Transistor und/oder einen Feldeffekttransistoren und/oder einen MOSFET und/oder einen Operationsverstärker und/oder einen integrierten Schaltkreis aufweist. Die integrierten Bauelemente und insbesondere die Halbleiterschalteinheiten besitzen dabei den Vorteil, dass eine Schaltung des Vorladestroms sehr effizient bei nur geringer Verlustleistung erfolgen kann. Weiter ist es denkbar, dass durch die Ladevorrichtung, insbesondere durch die Elektronikkomponenten, die aktive Steuerung des Vorladestroms getaktet erfolgt. Hierzu ist beispielsweise ein Taktgenerator vorgesehen, welche elektrisch / elektronisch mit den Elektronikkomponenten verbunden ist. Somit kann die Verlustleistung noch weiter reduziert werden.

Vorteilhafterweise kann bei der Erfindung vorgesehen sein, dass die Steuerungseinheit zumindest eine Schalteinheit umfasst, wobei die Schalteinheit vorzugsweise als Halbleiterschalter, insbesondere als MOSFET und/oder Leistungs-MOSFET ausgebildet ist. Weiter kann der Halbleiterschalter auch als Leistungs-Halbleiterschalter ausgebildet sein, welche die Schaltung hoher Ströme ermöglicht. Hierdurch kann die Effizienz und Zuverlässigkeit durch die Gewährleistung hoher Vorladestromstärken weiter erhöht werden.

Ebenfalls Gegenstand der Erfindung ist ein Verfahren zum Betrieb eines Batteriesystem, insbesondere mit einem wiederaufladbaren elektrischen Energiespeicher, insbesondere einem Lithium-Ionen-Akkumulator und/oder einer Lithiumbatterie, zur elektrischen Verbindung des Batteriesystems mit einer Komponente, insbesondere einer aktiven Komponenten, vorzugsweise einem Um- und/oder Wechselrichter. Hierbei ist vorgesehen, dass das Batteriesystem eine aktive Ladevorrichtung zur Vorladung einer Eingangskapazität der Komponente durch einen elektrischen Vorladestrom umfasst. Dabei ist die Ladevorrichtung insbesondere derart ausgebildet und/oder in einem Stromkreis des Batteriesystems integriert, dass eine aktive Steuerung des Vorladestroms durch die Ladevorrichtung durchgeführt wird. Mit anderen Worten steuert die Ladevorrichtung aktiv und/oder automatisch den Vorladestrom, insbesondere derart, dass der Vorladestrom zumindest eine bestimmte Stromstärke (d. h. bspw. irgendeine Stromstärke in einem bestimmten festgelegten Stromstärkenbereich) aufweist. Damit bringt das erfindungsgemäße Verfahren die gleichen Vorteile mit sich, wie sie ausführlich mit Bezug auf das erfindungsgemäße Batteriesystem beschrieben worden sind. Zudem kann das Verfahren geeignet sein, ein erfindungsgemäßes Batteriesystem, insbesondere eine erfindungsgemäße Ladevorrichtung zu betreiben.

In einer weiteren Möglichkeit kann vorgesehen sein, dass zumindest zwei und/oder drei und/oder vier und/oder fünft Batteriesysteme vorgesehen sind, und zur elektrischen Verbindung mit einer Komponente insbesondere parallel zusammengeschaltet werden, wobei ein durch die Ladevorrichtungen der Batteriesysteme ein Symmetrieren der Batteriesysteme erfolgt. Das Symmetrieren ermöglicht ein schnelles und zuverlässiges Angleichen der Systemspannungen der Batteriesysteme, insbesondere wenn die Batteriesysteme parallel geschaltet und/oder autonom voneinander sind. Insbesondere Lithium-Batteriesysteme besitzen bei unterschiedlichen Ladezuständen unterschiedlich hohe Systemspannungen. Bei einem Schließen des (Haupt-) Stromkreises der Batteriesysteme kann dies (ohne hinreichende Vorladung) zu hohen Ausgleichsströmen führen, welche eine Zerstörung oder Beschädigung der Batteriesysteme bewirken. Dabei können mittels der erfindungsgemäßen Ladevorrichtung und/oder dem erfindungsgemäßen Batteriesystem hohe Vorladeströme erzeugt und zur Symmetrierung der miteinander verschalteten Batteriesysteme genutzt werden. Der Vorladestrom fließt dabei als Ausgleichstrom insbesondere in das Batteriesystem mit der geringeren Systemspannung. Aufgrund der Gewährleistung von hohen Vorladeströmen, welche als Ausgleichströme genutzt werden können, kann eine Symmetrierung bei sehr geringer Wärmeentwicklung realisiert werden.

In einer weiteren Möglichkeit kann vorgesehen sein, dass die Ladevorrichtungen und/oder die Steuerungseinheit bei einer Aktivierung eines Hauptschalters des Batteriesystems überbrückt werden, insbesondere zur Aktivierung der Energieversorgung der Komponente durch den Energiespeicher. Hierzu ist die Ladevorrichtung insbesondere derart in den Stromkreis bzw. dem Vorladestromkreis integriert, dass bei einem Schließen des (Haupt-) Stromkreises der Vorladestromkreis überbrückt und der Batteriestrom ohne Begrenzung durch die Ladevorrichtung (vom Batteriesystem zur Komponente oder umgekehrt) fließen kann. Batteriestrom bezieht sich hierbei auch auf den Lade- und/oder Entladestrom, jedoch nicht auf den Vorladestrom. Die Überbrückung erfolgt z. B. durch einen Kurzschluss z. B. beim Schließen des Hauptschalters. Somit kann die Ladevorrichtung zuverlässig zur Vorladung genutzt werden, ohne im eigentlichen Betrieb des Batteriesystems (außerhalb des Vorladevorgangs) den Batteriestrom unnötig zu begrenzen.

Ebenfalls Gegenstand der Erfindung ist eine Ladevorrichtung für ein Batteriesystem zur Vorladung einer Eingangskapazität einer Komponente. Hierbei ist vorgesehen, dass die Ladevorrichtung insbesondere gemäß einem erfindungsgemäßen Verfahren und/oder mit einem erfindungsgemäßen Batteriesystem betreibbar ist. Damit bringt die erfindungsgemäße Ladevorrichtung die gleichen Vorteile mit sich, wie sie ausführlich mit Bezug auf ein erfindungsgemäßes Batteriesystem und ein erfindungsgemäßes Verfahren beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines erfindungsgemäßen Batteriesystems,
- Fig. 2: eine weitere schematische Darstellung des erfindungsgemäßen Batteriesystems,
- Fig. 3: eine perspektivische Draufsicht auf ein Batteriemanagementsystem,
- Fig. 4: eine schematische Darstellung eines erfindungsgemäßen Batteriesystems mit einer Komponente und einer schematischen Darstellung der Eingangskapazität,
- Fig. 5: eine weitere schematische Darstellung eines erfindungsgemäßen Batteriesystems mit einer Komponente und einer schematischen Darstellung der erfindungsgemäßen Ladevorrichtung,
- Fig. 6: eine weitere schematische Darstellung eines erfindungsgemäßen Batteriesystems und der erfindungsgemäßen Ladevorrichtung,
- Fig. 7: eine schematische Darstellung des Vorladestrom-Verlaufs und von Schaltvorgängen der erfindungsgemäßen Ladevorrichtung,
- Fig. 8: eine schematische Darstellung von mehreren, zusammengeschalteten erfindungsgemäßen Batteriesystemen,
- Fig. 9: eine schematische Darstellung eines erfindungsgemäßen Verfahrens.

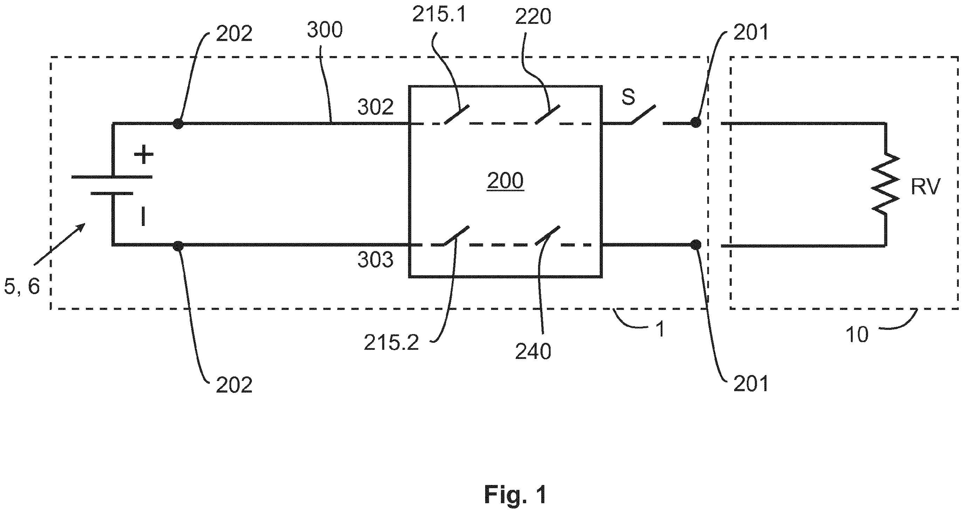

Figur 1 zeigt ein schematisches Schaltbild eines erfindungsgemäßen Batteriesystems 1, wobei ein Energiespeicher 5 sowie ein erfindungsgemäßes Batteriemanagementsystem 200 des Batteriesystems 1 dargestellt sind. Der Energiespeicher 5 kann dabei insbesondere als Lithium-Ionen-Batterie ausgebildet sein und weist vorzugsweise mehrere Energiespeicherzellen 6 (Batteriezellen) auf, welche z. B. parallel geschaltet zumindest ein Zellpaket 6 ergeben. Weiter ist auch eine aktive Komponente 10 dargestellt, welche z. B. als Last für das Batteriesystem 1 dient und/oder als Wechselrichter 10 ausgebildet sein kann. Die Komponente 10 dient ferner zur Verbindung des Batteriesystems 1 mit Verbrauchern, dargestellt durch einen Verbraucherwiderstand RV. Dabei kann die Komponente 10 in einem (Haupt-) Stromkreis 300 mit dem Batteriesystem 1 derart verbunden werden, dass ein Stromfluss (elektrischer Ladungstransport) möglich ist und ein Batteriestrom bzw. Lade-und/oder Entladestrom fließt. Hierzu ist es z. B. notwendig, dass Anschlüsse der Komponente 10 mit elektrischen Verbindungskontakten 201 des Batteriesystems 1 verbunden werden. Weiter kann zur Inbetriebnahme des Batteriesystems 1 an der Komponente 10 vorausgesetzt werden, dass zumindest ein Hauptschalter S des Batteriesystems 1 z. B. manuell geschlossen wird. Der Hauptschalter S in der dargestellten Schaltung repräsentiert vorzugsweise einen oder mehrere manuell betätigbare elektrische Schalteinheiten, welche z. B. durch einen Benutzer des Batteriesystems 1 bedient werden. Auch kann es vorgesehen sein, dass neben dem Hauptschalter S noch ein Vorladeschalter 111 vorgesehen ist, welcher vor der Inbetriebnahme durch den Hauptschalter S betätigt wird, um eine Vorladung einer Kapazität der Komponente 10 zu bewirken.

Es ist in Figur 1 ferner erkennbar, dass das Batteriesystem 1 aus Sicherheitsgründen ein erfindungsgemäßes Batteriemanagementsystem 200 aufweist, welches im (Haupt-) Stromkreis 300 des Batteriesystems 1 (bzw. des Energiespeichers 5) integriert ist. Das Batteriemanagementsystem 200 umfasst mehrere schematisch dargestellte Schalteinheiten 215.1, 215.2, 220, 240, welche derart im Batteriesystem 1 angeordnet und/oder integriert sind, dass eine Unterbrechung des (Haupt-) Stromkreises 300 und/oder eine Unterbindung eines Stromflusses im (Haupt-) Stromkreis 300 zumindest in eine Richtung durchführbar ist. Bevorzugt ist dabei eine erste Halbleiterschalteinheit 215.1 im Pluszweig 302 (d. h. im positiven Strompfad 302 des Stromkreises 300) und eine zweite Halbleiterschalteinheit 215.2 im Minuszweig 303 (d. h. im negativen Strompfad 303 des Stromkreises 300) vorgesehen. Die Halbleiterschalteinheiten 215 sind dabei als elektronischer Schalter, bevorzugt als Feldeffekttransistoren, und besonders bevorzugt als MOSFETs ausgebildet, um bei einer Aktivierung bzw. einem Schalten den Stromfluss zumindest in eine Richtung zu unterbinden. Als redundante Schalteinheiten sind ferner eine Sicherheitsschalteinheit 220, insbesondere im Pluszweig 302, und/oder eine Überstromschutzeinrichtung 240, insbesondere im Minuszweig 303 vorgesehen. Anders als die Halbleiterschalteinheiten 215 dienen dabei die redundanten Schalteinheiten zur redundanten, irreversiblen und/oder vollständigen Trennung des (Haupt-) Stromkreises 300, insbesondere durch eine vollständige galvanische Trennung. Auch ist es denkbar, dass das Batteriemanagementsystem 200 noch weitere Schalteinheiten aufweist, um z. B. die Sicherheit noch weiter zu erhöhen. Weiter sind noch zwei Kontakte 202 dargestellt, welche eine elektrische Verbindung des Batteriemanagementsystems 200 zu dem zumindest einen Energiespeicher 5 ermöglichen. Die in den Figuren gezeigten Schaltbilder sind dabei rein schematisch, so dass selbstverständlich auch eine veränderte Anordnung der Bauelemente denkbar ist.

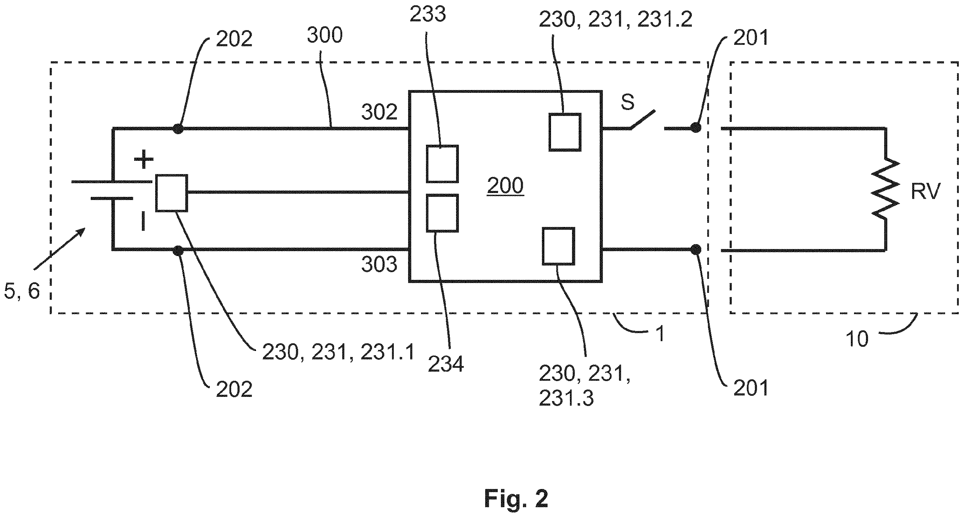

Figur 2 zeigt eine weitere schematische Darstellung des erfindungsgemäßen Batteriesystems 1, wobei weitere Komponenten des erfindungsgemäßen Batteriemanagementsystems 200 schematisch gezeigt sind. Neben den in Figur 2 nicht dargestellten Schalteinheiten 215.1, 215.2, 220, 240 umfasst das erfindungsgemäße Batteriemanagementsystem 200 zumindest eine Überwachungsvorrichtung 230, wobei beispielhaft die Anordnung von Überwachungseinheiten 231 am Batteriesystem 1 dargestellt ist. Die Überwachungseinheiten 231 und die Überwachungsvorrichtung 230 dienen zur Ermittlung von Parametern des Energiespeichers 5. Eine erste Überwachungseinheit 231.1 ist dabei im Bereich und/oder innerhalb des Energiespeichers 5 bzw. bei und/oder innerhalb der Energiespeicherzellen 6 angeordnet, um die Batterie und/oder die Zellen zu überwachen und so die Parameter des Energiespeichers 5 zu ermitteln (z. B. Temperatur und/oder Kapazität und/oder Spannung und/oder Strom oder dergleichen). Eine weitere zweite Überwachungseinheit 231.2 und eine dritte Überwachungseinheit 231.3 sind im Batteriemanagementsystem 200 integriert und dienen z. B. zur Überwachung des (Haupt-) Stromkreises 300 (z. B. Strom und/oder Spannung) und/oder zur Überwachung der Temperatur oder dergleichen. Die Überwachungseinheiten 231 können dabei z. B. als Sensoren ausgebildet sein, und elektrisch z. B. mit einer zentralen Überwachungsvorrichtung 230 und/oder mit einer Auswerte-Steuerungseinheit 233 derart verbunden sein, dass die durch die Sensoren erfassten Messwerte und/oder elektrischen Signale von der Überwachungsvorrichtung 230 und/oder von der Auswerte-Steuerungseinheit 233 erfasst und/oder ausgewertet werden können, um so die Parameter zu ermitteln. Zusätzlich oder alternativ können die Überwachungseinheiten 231 auch autonom und/oder autark voneinander ausgebildet sein und genutzt werden. So kann bspw. vorgesehen sein, dass die Überwachungsvorrichtung 230 ein Überwachungssystem bildet, welches mehrere Überwachungseinheiten 231 umfasst. Die Überwachungseinheiten 231 können jeweils z. B. mit einer zentralen Auswerte-Steuerungseinheit 233 und/oder mit mehreren unabhängigen Auswerte-Steuerungseinheiten 233 verbunden sein. Die Auswerte-Steuerungseinheit 233 kann dabei die elektrischen Signale und/oder Messwerte von den Überwachungseinheiten 231 empfangen, auswerten, ggf. (zwischen-)speichern und so die Parameter ermitteln. Dabei ist die Auswerte-Steuerungseinheit 233 z. B. mit einem nicht-flüchtigen Datenspeicher 234 elektrisch / elektronisch verbunden.

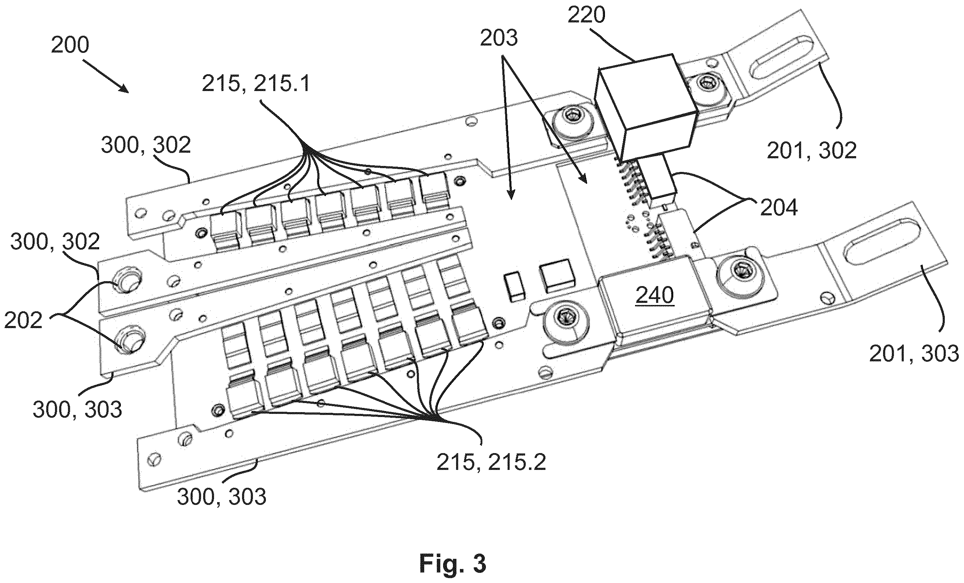

Figur 3 zeigt eine Draufsicht auf ein erfindungsgemäßes Batteriemanagementsystem 200, wobei insbesondere die Elektronik (d. h. die elektrischen Komponenten) des Batteriemanagementsystems 200 gezeigt werden. Die Elektronik ist dabei auf einer Platine 203 des Batteriemanagementsystems 200 angeordnet, wobei die Platine 203 z. B. von einem nicht dargestellten äußeren Gehäuse umgeben ist. Weiter sind Leitungsbahnen bzw. Stromschienen des (Haupt-) Stromkreises 300 dargestellt, welcher das Batteriesystem 1 bzw. den Energiespeicher 5 mit der Komponente 10 verbindet. So ist ein positiver Strompfad 302 und ein negativer Strompfad 303 dargestellt, wobei die elektrischen Leitungen den Stromfluss des Batteriestroms und/oder des Lade- und/oder Entladestroms des Energiespeichers 5 ermöglichen. Um das Batteriesystem 1 mit dem Batteriemanagementsystem 200 zu verbinden, sind an den Leitungen Kontakte 202 vorgesehen, welche z. B. mittels einer Schraub- und/oder Steck- und/oder Clipsverbindung eine elektrische Verbindung bzw. Kontaktierung zum Energiespeicher 5 (bzw. der elektrischen Anschlüsse des Energiespeichers 5) ermöglichen. Der Stromfluss im (Haupt-) Stromkreis 300 erfolgt dabei vom Energiespeicher 5 über die Kontakte 202 zunächst zu den Halbleiterschalteinheiten 215 und dann über die Halbleiterschalteinheiten 215 zu den redundanten Schalteinheiten 220, 240 und anschließend zu den Verbindungskontakten 201, welche elektrisch z. B. über Endableitungen mit der Komponente 10 verbunden werden. Auch ist es selbstverständlich möglich, dass der Stromfluss in Abhängigkeit von der Stromrichtung (z. B. bei einem Ladestrom) genau umgekehrt erfolgt. Entscheidend ist hierbei, dass die Halbleiterschalteinheiten 215 und/oder die redundanten Schalteinheiten 220, 240 den Stromfluss zumindest teilweise unterbinden können. Auch sind Schnittstellen 204 gezeigt, welche z. B. als Steckverbindungen ausgebildet sein können und eine Kommunikation mit externen Geräten ermöglichen. Hierzu sind die Schnittstellen 204 elektrisch mit der Elektronik des Batteriemanagementsystems 200 verbunden. Die Elektronik weist dabei bspw. zumindest eine elektrische Komponente, wie eine nicht explizit dargestellte Auswerte-Steuerungseinheit 233 und/oder einen (nicht-flüchtigen) Datenspeicher 234 und/oder eine Überwachungsvorrichtung 230 bzw. Überwachungseinheit 231 auf. Die elektrischen Komponenten können bspw. als integrierte Schaltkreise, Mikrocontroller und/oder Logik- bzw. Elektronikbausteine ausgebildet sein.

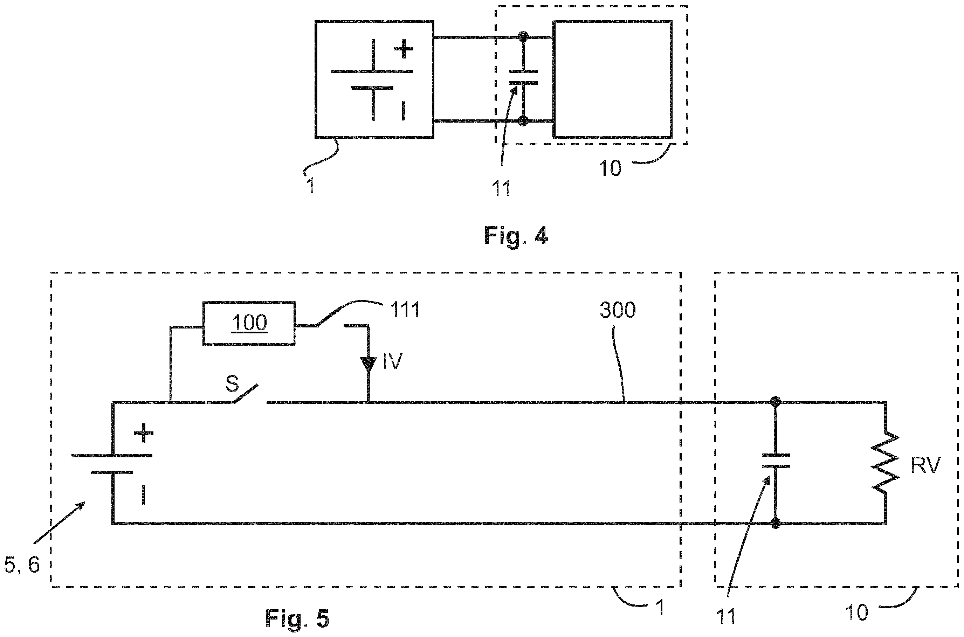

In Figur 4 ist schematisch das erfindungsgemäße Batteriesystem 1 gezeigt, wobei das Batteriesystem 1 elektrisch mit einer Komponente 10 verbunden ist. Die elektrische Verbindung bildet dabei insbesondere den (Haupt-) Stromkreis 300 und/oder den Vorladestromkreis, welche in Figur 5 näher dargestellt sind. Die Komponente 10 weist ferner eine Eingangskapazität 11 auf, welche aufgrund der elektrischen Ausbildung insbesondere durch aktive Bauelemente der Komponente 10 entsteht. Die Darstellung der Eingangskapazität 11 in den Figuren 4, 5 und 6 dient daher rein schematisch zur Visualisierung der Eingangskapazität 11 und bezieht sich folglich nicht auf ein separates Bauteil.

Figur 5 zeigt eine weitere schematische Darstellung des erfindungsgemäßen Batteriesystems 1, das mit der Komponente 10 elektrisch verbunden ist. Dabei sind die Eingangskapazität 11 und - ebenfalls rein schematisch - ein Verbraucherwiderstand RV gezeigt. Das Batteriesystem 1 und insbesondere ein Energiespeicher 5 des Batteriesystems 1 ist dabei elektrisch mit der Komponente 10 verbunden, wobei hierdurch (insbesondere bei einem Schließen eines Hauptschalters S) ein (Haupt-) Stromkreis 300 geschlossen wird. Der (Haupt-) Stromkreis 300 ermöglicht dabei den Stromfluss des Batteriestroms zwischen dem Energiespeicher 5 (bzw. zumindest einer Energiespeicherzelle 6 des Energiespeichers 5) und der Komponente 10. Weiter ist eine erfindungsgemäße Ladevorrichtung 100 des erfindungsgemäßen Batteriesystems 1 dargestellt, welche ebenfalls mit der Komponente 10 und der Eingangskapazität 11 elektrisch verbunden ist und auf diese Weise einen Vorladestromkreis bildet. Durch den Vorladestromkreis kann ein Vorladestrom IV von dem Batteriesystem 1 zu der Komponente 10 fließen. Der Vorladestrom IV wird dabei durch die Ladevorrichtung 100 begrenzt und/oder gesteuert und/oder beeinflusst. Bei einem Schließen des (Haupt-) Stromkreises 300 (z. B. durch das Schließen des Hauptschalters S) wird ferner die Ladevorrichtung 100 überbrückt, was schematisch durch die Parallelschaltung der Ladevorrichtung 100 zum Hauptschalter S in Figur 5 gezeigt ist. Der Stromfluss des Batteriestroms erfolgt damit unbegrenzt und/oder unbeeinflusst von der Ladevorrichtung 100. Ein direktes Schließen des (Haupt-) Stromkreises 300 ohne Vorladung der Eingangskapazität 11 hätte damit einen sehr hohen Einschaltstrom zur Folge, welcher lediglich durch den Innenwiderstand des Batteriesystems 1 begrenzt wird. Durch die Vorladung der Eingangskapazität 11 mit dem Vorladestrom IV werden der Einschaltstrom reduziert und Schäden am Batteriesystem 1 oder der Komponente 10 vermieden.

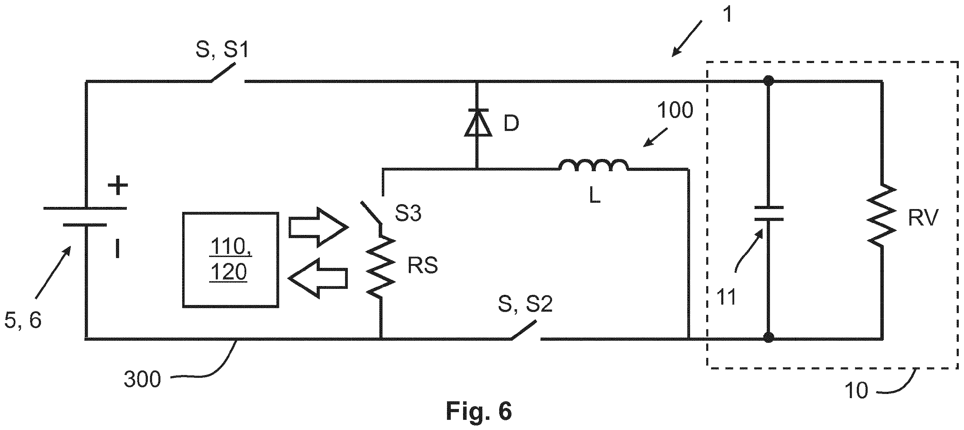

Figur 6 zeigt schematisch einen detaillierteren Aufbau des erfindungsgemäßen Batteriesystems 1 bzw. der erfindungsgemäßen Ladevorrichtung 100. Wie zu erkennen ist, kann der in den Figuren 5 und 6 lediglich schematisch dargestellte Hauptschalter S bspw. auch zwei separate Schalteinheiten S1 und S2 oder eine sonstige Ausgestaltung, z. B. als elektronische Schaltung aufweisen. Er dient dabei insbesondere funktionell dazu, den (Haupt-) Stromkreis 300 zu schließen und den Vorladestromkreis bzw. die Ladevorrichtung 100 zu überbrücken, und weist daher eine entsprechend geeignete Ausgestaltung auf. Auch kann der Vorladeschalter 111 im Hauptschalter S integriert sein. Die Schalteinheiten S1 und S2 werden dabei nicht notwendigerweise gleichzeitig, sondern ggf. (manuell oder automatisch) nacheinander und/oder zeitverzögert geschlossen. So kann (z. B. durch das Schließen der Schalteinheit S1 bei offener Schalteinheit S2) zunächst eine Vorladung der Eingangskapazität 11 und anschließend (bspw. durch das Schließen von S2 bei geschlossenem S1) ein vollständiges Schließen des Hauptschalters S und des (Haupt-) Stromkreises 300 bewirkt werden. Weiter ist beispielhaft eine Schaltanordnung für die erfindungsgemäße Ladevorrichtung 100 schematisch gezeigt, welche in den Stromkreis 300 des Batteriesystems 1 integriert ist. Die Integration der Leitungsvorrichtung 100 erfolgt dabei derart, dass durch die Ladevorrichtung 100 ein Vorladestromkreis zur Vorladung der Eingangskapazität 11 (bei geöffnetem Stromkreis 300) geschlossen und/oder mit einem Vorladestrom IV versorgt werden kann. Weiter weist die Ladevorrichtung 100 eine Schalteinheit S3, eine Diode und/oder Gleichrichter D, einen Shuntwiderstand RS sowie eine Induktivität L auf. Ferner ist eine Steuerungseinheit 110 und eine Messvorrichtung 120 vorgesehen, um die Steuerung des Vorladestroms IV zu bewirken. Dazu wird insbesondere eine Überwachung des Vorladestroms IV und eine Ansteuerung der Schalteinheit S3 durchgeführt, wie durch Pfeile veranschaulicht ist.

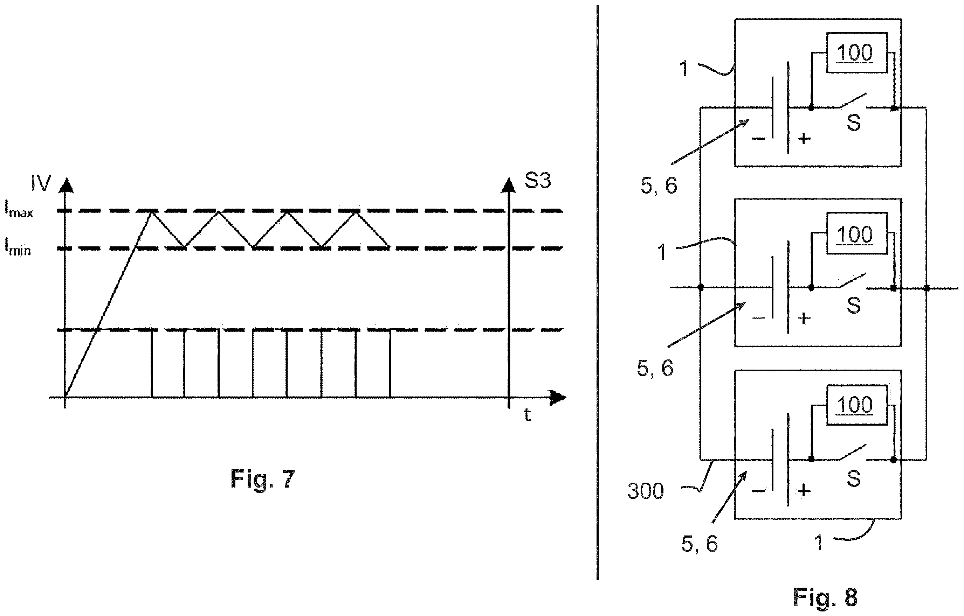

Im Folgenden wird der Vorladevorgang näher beschrieben, wobei der Ablauf anhand des in Figur 7 dargestellten Vorladestromverlaufs und dem ebenfalls dargestellten Zustand der Schalteinheit S3 über die Zeit t nachvollziehbar ist. Die Stromstärke des Vorladestroms IV wird dabei zunächst bei geschlossener Schalteinheit S3 überwacht und/oder gemessen, während der Vorladestrom IV begrenzt durch die Induktivität L ansteigt. Wird dann der gewünschte Vorladestrom IV, d. h. der obere Vorladestromgrenzwert Imax erreicht, öffnet die Ladevorrichtung 100 die Schalteinheit S3 und der Vorladestrom IV wird reduziert (bspw. über die Diode D zurück zum Verbraucher und Kondensator C geführt). Anschließend sinkt der Vorladestrom IV, wobei bei dem Erreichen des unteren Vorladestromgrenzwertes Imin die Schalteinheit S3 erneut schließt. Auf diese Weise wird eine aktive Steuerung des Vorladestroms IV erreicht.

In Figur 8 ist eine parallele Zusammenschaltung mehrerer erfindungsgemäßer Batteriesysteme 1 gezeigt, wobei jedes Batteriesystem 1 eine erfindungsgemäße Ladevorrichtung 100 aufweist. Durch das Zusammenschließen der Batteriesysteme 1 wird ferner ein Stromkreis 300 gebildet, in welchem ebenfalls eine Komponente 10 integriert sein kann. Durch Aktivierung der Ladevorrichtung 100, d. h. bspw. durch das Schließen des Vorladeschalters 111, kann dann ein Vorladestrom IV durch die Ladevorrichtungen 100 geliefert werden. Der (durch die Ladevorrichtung 100 begrenzter bzw. bestimmter) Vorladestrom IV fließt dann als Ausgleichstrom zu den Batteriesystemen 1 mit geringerer Systemspannung. Hierdurch wird zuverlässig verhindert, dass bei einem späteren Schließen des (Haupt-) Stromkreises 300 bei gleichzeitiger Überbrückung der Ladevorrichtung 100 ein unbegrenzter Batteriestrom fließt. Dies kann dann ggf. zu hohen Ausgleichströmen führen, welche eine Beschädigung des Batteriesystems 1 verursachen können.

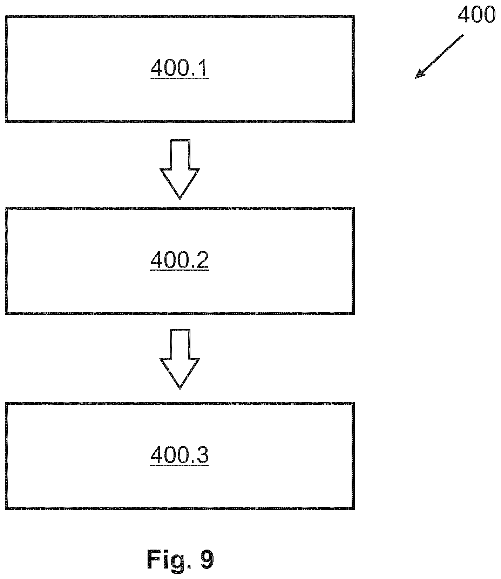

In Figur 9 ist im schematisch ein erfindungsgemäßes Verfahren 400 visualisiert gezeigt, wobei gemäß einem ersten Verfahrensschritt 400.1 ein Vorladestrom IV überwacht und aktiv durch eine erfindungsgemäße Ladevorrichtung 100 gesteuert wird. Erreicht und/oder überschreitet der Vorladestrom IV anschließend gemäß dem zweiten Verfahrensschritt 400.2 einen oberen Vorladestromgrenzwert Imax, so wird der Vorladestrom IV begrenzt und/oder der Vorladestromkreis unterbrochen (geöffnet). Erreicht und/oder unterschreitet der Vorladestrom IV anschließend gemäß dem dritten Verfahrensschritt 400.3 einen unteren Vorladestromgrenzwert Imin, so wird der Vorladestrom IV begrenzt und/oder der Vorladestromkreis geschlossen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Batteriesystem
- 5: Energiespeicher
- 6: Energiespeicherzelle, Zellpaket
- 10: Komponente
- 11: Eingangskapazität

- 100: Ladevorrichtung, Konstantstromquelle
- 110: Steuerungseinheit
- 111: Vorladeschalter
- 120: Messvorrichtung

- 200: Batteriemanagementsystem
- 201: elektrische Verbindungskontakte zu 10
- 202: Kontakte zu 6
- 203: Platine
- 204: Schnittstellen

- 215: Halbleiterschalteinheit
- 215.1: Erste Halbleiterschalteinheit
- 215.2: Zweite Halbleiterschalteinheit

- 220: Sicherheitsschalteinheit
- 230: Überwachungsvorrichtung
- 231: Überwachungseinheit
- 231.1: Erste Überwachungseinheit
- 231.2: Zweite Überwachungseinheit
- 231.3: Dritte Überwachungseinheit

- 233: Auswerte-Steuerungseinheit
- 234: Datenspeicher
- 240: Überstromschutzeinrichtung

- 300: (Haupt-) Stromkreis
- 302: Pluszweig, positiver Strompfad
- 303: Minuszweig, negativer Strompfad

- 400: Verfahren
- 400.1: Erster Verfahrensschritt
- 400.2: Zweiter Verfahrensschritt
- 400.3: Dritter Verfahrensschritt

- IV: Vorladestrom
- S: Schalteinheit
- S1: Schalteinheit
- S2: Schalteinheit
- S3: Schalteinheit
- RV: Verbraucherwiderstand
- D: Diode, Gleichrichter
- L: Induktivität, Spule
- RS: Shuntwiderstand
- Imax: oberer Vorladestromgrenzwert
- Imin: unteren Vorladestromgrenzwert
- t: Zeit

## Patentansprüche

1. Batteriesystem (1), insbesondere mit einem wiederaufladbaren elektrischen Energiespeicher (5), insbesondere einer Lithiumbatterie (5), zur elektrischen Verbindung mit einer aktiven Komponente (10), wobei das Batteriesystem (1) eine aktive Ladevorrichtung (100) zur Vorladung einer Eingangskapazität (11) der Komponente (10) durch einen elektrischen Vorladestrom (IV) umfasst, wobei
die Ladevorrichtung (100) derart ausgebildet ist, dass eine aktive Steuerung des Vorladestroms (IV) durchführbar ist, **dadurch gekennzeichnet, dass** durch die Steuerung eine vorbestimmte Stromstärke des Vorladestroms (IV) innerhalb eines vorgegebenen Toleranzbereiches beibehaltbar ist.

2. Batteriesystem (1) nach Anspruch 1,
**dadurch gekennzeichnet,**
**dass** die Ladevorrichtung (100) eine Messvorrichtung (120) zur Überwachung, und insbesondere Messung des Vorladestroms (IV) aufweist.

3. Batteriesystem (1) nach Anspruch 2,
**dadurch gekennzeichnet,**
**dass** die Ladevorrichtung (100) eine Steuerungseinheit (110) aufweist, um in Abhängigkeit von der Überwachung der Messvorrichtung (120) den Vorladestrom (IV) aktiv zu steuern und insbesondere zu schalten.

4. Batteriesystem (1) nach einem der vorhergehenden Ansprüche,
**dadurch gekennzeichnet,**
**dass** die Ladevorrichtung (100) im negativen Strompfad (303) und/oder im positiven Strompfad (302) des Energiespeichers (5) angeordnet ist.

5. Batteriesystem (1) nach einem der vorhergehenden Ansprüche,
**dadurch gekennzeichnet,**
**dass** die Ladevorrichtung (100) derart ausgebildet ist, dass ein Vorladestrom (IV) mit einer Stromstärke von mindestens 0,1 Ampere und/oder 0,5 Ampere und/oder 1 Ampere und/oder 2 Ampere und/oder 5 Ampere und/oder 10 Ampere und/oder im Bereich von 1 Ampere bis 10 Ampere lieferbar ist.

6. Batteriesystem (1) nach einem der vorhergehenden Ansprüche,
**dadurch gekennzeichnet,**
**dass** die Ladevorrichtung (100) als Konstantstromquelle (100) und/oder Stromlimitierungsvorrichtung (100) ausgebildet ist.

7. Batteriesystem (1) nach einem der vorhergehenden Ansprüche,
**dadurch gekennzeichnet,**
**dass** die Ladevorrichtung (100) zumindest ein aktives und/oder integriertes elektrisches Bauelement und/oder eine Elektronikkomponente aufweist, insbesondere einen Transistor und/oder einen Feldeffekttransistor und/oder einen MOSFET und/oder einen Operationsverstärker und/oder einen integrierten Schaltkreis.

8. Batteriesystem (1) nach einem der Ansprüche 3 bis 7,
**dadurch gekennzeichnet,**
**dass** die Steuerungseinheit (110) zumindest eine Schalteinheit (S3) umfasst, wobei die Schalteinheit (S3) elektronisch ansteuerbar ist, und vorzugsweise als Halbleiterschalter, insbesondere als MOSFET und/oder Leistungs-MOSFET ausgebildet ist.

9. Verfahren (400) zum Betreiben eines Batteriesystem (1), insbesondere mit einem wiederaufladbaren elektrischen Energiespeicher (5), insbesondere einer Lithiumbatterie (5), zur elektrischen Verbindung des Batteriesystems (1) mit einer Komponente (10), insbesondere einer aktiven Komponente (10), wobei
das Batteriesystem (1) eine aktive Ladevorrichtung (100) zur Vorladung einer Eingangskapazität (11) der Komponente (10) durch einen elektrischen Vorladestrom (IV) umfasst, wobei
die Ladevorrichtung (100) eine aktive Steuerung des Vorladestroms (IV) durchführt, wobei durch die Steuerung eine vorbestimmte Stromstärke des Vorladestroms (IV) innerhalb eines vorgegebenen Toleranzbereiches beibehalten wird.

10. Verfahren (400) nach Anspruch 9,
**dadurch gekennzeichnet,**
**dass** zumindest zwei Batteriesysteme (1) vorgesehen sind, und zur elektrischen Verbindung mit einer Komponente (10) insbesondere parallel zusammengeschaltet werden, wobei durch die Ladevorrichtungen (100) der Batteriesysteme (1) ein Symmetrieren der Batteriesysteme (1) erfolgt.

11. Verfahren (400) nach Anspruch 9 oder 10,
**dadurch gekennzeichnet,**
**dass** ein Batteriesystem (1) gemäß einem der Ansprüche 1 bis 8 zum Einsatz kommt.

12. Ladevorrichtung (100) für ein Batteriesystem (1) nach einem der Ansprüche 1 bis 8, zur Vorladung einer Eingangskapazität (11) einer Komponente (10), wobei die Ladevorrichtung (100) insbesondere gemäß einem Verfahren (400) nach einem der Ansprüche 9 bis 11 betreibbar ist.

## Claims

1. A battery system (1), in particular having a rechargeable electrical energy store (5), in particular a lithium battery (5), for electrical connection to an active component (10), wherein the battery system (1) comprises an active charging means (100) for pre-charging an input capacitance (11) of the component (10) by means of an electric pre-charging current (IV), wherein
the charging means (100) is configured such that an active control of the pre-charging current (IV) can be performed, **characterised in that**
by means of the control a predetermined current intensity of the pre-charging current (IV) can be maintained within a preset tolerance range.

2. The battery system (1) according to claim 1,
**characterised in that**
the charging means (100) has a measuring means (120) for monitoring and in particular measuring the pre-charging current (IV).

3. The battery system (1) according to claim 2,
**characterised in that**
the charging means (100) has a control unit (110) for actively controlling and in particular switching the pre-charging current (IV) as a function of the monitoring by the measuring means (120).

4. The battery system (1) according to one of the preceding claims,
**characterised in that**
the charging means (100) is arranged in the negative current path (303) and/or in the positive current path (302) of the energy store (5).

5. The battery system (1) according to one of the preceding claims,
**characterised in that**
the charging means (100) is configured such that a pre-charging current (IV) with a current intensity of at least 0.1 amperes and/or 0.5 amperes and/or 1 ampere and/or 2 amperes and/or 5 amperes and/or 10 amperes and/or in the range of 1 ampere to 10 amperes can be supplied.

6. The battery system (1) according to one of the preceding claims,
**characterised in that**
the charging means (100) is configured as a constant current source (100) and/or current limiting means (100).

7. The battery system (1) according to one of the preceding claims,
**characterised in that**
the charging means (100) has at least one active and/or integrated electrical device and/or an electronic component, in particular a transistor and/or a field effect transistor and/or a MOSFET and/or an operational amplifier and/or an integrated circuit.

8. The battery system (1) according to one of claims 3 to 7,
**characterised in that**
the control unit (110) comprises at least one switching unit (S3), wherein said switching unit (S3) can be electronically controlled and is preferably configured as a semiconductor switch, in particular as a MOSFET and/or power MOSFET.

9. A method (400) of operating a battery system (1), in particular having a rechargeable electrical energy store (5), in particular a lithium battery (5), for the electrical connection of the battery system (1) to a component (10), in particular an active component (10), wherein
the battery system (1) comprises an active charging means (100) for pre-charging an input capacitance (11) of the component (10) by means of an electric pre-charging current (IV), wherein
the charging means (100) performs an active control of the pre-charging current (IV), wherein by means of the control a predetermined current intensity of the pre-charging current (IV) is maintained within a preset tolerance range.

10. The method (400) according to claim 9,
**characterised in that**
at least two battery systems (1) are provided and are coupled together, in particular in parallel, for electrical connection to a component (10), wherein by means of the charging means (100) of the battery systems (1) a symmetrising of the battery systems (1) takes place.

11. The method (400) according to claim 9 or 10,
**characterised in that**
a battery system (1) according to one of claims 1 to 8 is employed.

12. A charging means (100) for a battery system (1) according to one of claims 1 to 8 for pre-charging an input capacitance (11) of a component (10), wherein the charging means (100) can be operated in particular by a method (400) according to one of claims 9 to 11.

## Revendications

1. Système de batterie (1), en particulier avec un accumulateur d'énergie (5) électrique rechargeable, en particulier une batterie au lithium (5), destiné à être relié de manière électrique à un composant (10) actif, dans lequel le système de batterie (1) comprend un dispositif de charge (100) actif servant au chargement préalable d'une capacité d'entrée (11) du composant (10) par un courant de pré-charge (IV) électrique,
dans lequel
le dispositif de charge (100) est réalisé de telle manière qu'une commande active du courant de pré-charge (IV) peut être exécutée, **caractérisé en ce que** une intensité de courant prédéfinie du courant de pré-charge (IV) peut être maintenue dans une plage de tolérance spécifiée par la commande.

2. Système de batterie (1) selon la revendication 1,
**caractérisé en ce que**
le dispositif de charge (100) présente un dispositif de mesure (120) servant à la surveillance, et en particulier à la mesure du courant de pré-charge (IV).

3. Système de batterie (1) selon la revendication 2,
**caractérisé en ce que**
le dispositif de charge (100) présente une unité de commande (110) afin de commander de manière active et en particulier de commuter le courant de pré-charge (IV) en fonction de la surveillance du dispositif de mesure (120).

4. Système de batterie (1) selon l'une quelconque des revendications précédentes,
**caractérisé en ce que**
le dispositif de charge (100) est disposé sur le chemin de courant négatif (303) et/ou sur le chemin de courant positif (302) de l'accumulateur d'énergie (5).

5. Système de batterie (1) selon l'une quelconque des revendications précédentes,
**caractérisé en ce que**
le dispositif de charge (100) est réalisé de telle manière qu'un courant de pré-charge (IV) avec une intensité de courant d'au moins 0,1 ampère et/ou de 0,5 ampère et/ou de 1 ampère et/ou de 2 ampères et/ou de 5 ampères et/ou de 10 ampères et/ou dans la plage allant de 1 ampère à 10 ampères peut être fourni.

6. Système de batterie (1) selon l'une quelconque des revendications précédentes,
**caractérisé en ce que**
le dispositif de charge (100) est réalisé sous la forme d'une source de courant constante (100) et/ou d'un dispositif de limitation de courant (100).

7. Système de batterie (1) selon l'une quelconque des revendications précédentes,
**caractérisé en ce que**
le dispositif de charge (100) présente au moins un élément structurel électrique actif et/ou intégré et/ou un composant électronique, en particulier un transistor et/ou un transistor à effet de champ et/ou un MOSFET et/ou un amplificateur d'opération et/ou un circuit de commutation intégré.

8. Système de batterie (1) selon l'une quelconque des revendications 3 à 7,
**caractérisé en ce que**
l'unité de commande (110) comprend une unité de commutation (S3), dans lequel l'unité de commutation (S3) peut être pilotée de manière électronique, et de préférence est réalisée sous la forme d'un commutateur à semi-conducteurs, en particulier sous la forme d'un MOSFET et/ou d'un MOSFET de puissance.

9. Procédé (400) servant à faire fonctionner un système de batterie (1), en particulier avec un accumulateur d'énergie (5) électrique rechargeable, en particulier une batterie au lithium (5), servant à relier de manière électrique le système de batterie (1) à un composant (10), en particulier à un composant (10) actif, dans lequel
le système de batterie (1) comprend un dispositif de charge (100) actif servant à charger de manière préalable une capacité d'entrée (11) du composant (10) par un courant de pré-charge (IV) électrique, dans lequel
le dispositif de charge (100) exécute une commande active du courant de pré-charge (IV), une intensité de courant prédéfinie du courant de pré-charge (IV) étant maintenue dans une plage de tolérance spécifiée par la commande.

10. Procédé (400) selon la revendication 9,
**caractérisé en ce que**
au moins deux systèmes de batterie (1) sont prévus et sont branchés ensemble en particulier en parallèle aux fins de la liaison électrique à un composant (10), une symétrisation des systèmes de batterie (1) étant effectuée par les dispositifs de charge (100) des systèmes de batterie (1).

11. Procédé (400) selon la revendication 9 ou 10,
**caractérisé en ce qu'**
un système de batterie (1) selon l'une quelconque des revendications 1 à 8 est utilisé.

12. Dispositif de charge (100) pour un système de batterie (1) selon l'une quelconque des revendications 1 à 8, servant à charger de manière préalable une capacité d'entrée (11) d'un composant (10), le dispositif de charge (100) pouvant fonctionner en particulier selon un procédé (400) selon l'une quelconque des revendications 9 à 11.
